# EUROPEAN PATENT APPLICATION

(11) **EP 4 664 567 A1**
(43) Date of publication of application: **17.12.2025**
(21) Application number: 24780484.2
(22) Date of filing: 27.03.2024
(51) Int. Cl.: H01M 4/66, H01M 4/13

(54) **METAL FOIL FOR CURRENT COLLECTORS, ELECTRODE, AND BATTERY**

(30) Priority: 30.03.2023 JP 2023055724
(71) Applicant: NIPPON STEEL CHEMICAL & MATERIAL CO., LTD., Tokyo 103-0027 (JP)
(72) Inventor: NAGATA, Tatsuo, Tokyo 100-8071 (JP); OGURA, Takuya, Tokyo 100-8071 (JP); FUJIMOTO, Naoki, Tokyo 103-0027 (JP)
(74) Representative: Zimmermann & Partner Patentanwälte mbB
(86) International application number: PCT/JP2024/012304
(87) International publication number: WO 2024/204382

(57) **Abstract**

Provided is a metal foil for a current collector that can have increased adhesiveness to an electrode mixture layer while maintaining the discharge capacity of a battery. The metal foil for a current collector according to the present disclosure includes a base material and a plurality of composite bodies held on the surface of the base material. The plurality of composite bodies include Ni particles having an average particle size of 20 µm or less, a sintered body formed by sintering a plurality of the Ni particles, and a resin with a volume% of 14.0 to 40.0. On a surface of the metal foil for a current collector, the number of peaks whose height from the surface of the base material is larger than 10 µm is 20.0 to 50.0 /mm, the peaks being identified through line roughness analysis.

## Description

### TECHNICAL FIELD

The present disclosure relates to a metal foil for a current collector to be used in an electrode of a battery, an electrode in which the metal foil for a current collector is used, and a battery in which the electrode is used.

### BACKGROUND ART

Batteries such as primary batteries and secondary batteries are being used as power sources for various electronic devices. Specifically, secondary batteries such as lithium ion batteries have rapidly come into widespread use in recent years due to the widespread use of small electronic devices such as home video cameras, notebook computers, and smartphones. With further downsizing and improvement in the performance of such small electronic devices, there is a demand to further reduce the size and improve the performance of such batteries. Note that the term "secondary battery" as used in the present description is a general term that encompasses, for example, non-aqueous electrolyte secondary batteries, aqueous electrolyte secondary batteries, and all-solid-state secondary batteries.

A battery includes electrodes and an electrolyte. The electrodes include a positive electrode and a negative electrode. In both the positive electrode and the negative electrode, an electrode mixture layer is formed on a current collector. The current collector is a base material of the electrode. The electrode mixture layer includes an active material. The electrode mixture layer may also include a binder. The current collector has a function of supplying electrical current to the active material and a function of retaining the active material. Metal foils have so far been used as current collectors. Specifically, in lithium ion batteries, for example, copper foil is currently used as a negative electrode current collector, and aluminum foil is currently used as a positive electrode current collector.

The term "active material" means a material that is capable of occluding and releasing ions included in the electrolyte. Specifically, in lithium ion batteries, for example, a graphite-based carbon material is currently used as a negative electrode active material, and an oxide such as LiCoO₂ is currently used as a positive electrode active material. The binder has a function of binding together particles of the active material, and binding the active material and the current collector. The binder is, for example, a resin.

If the electrolyte is dissolved in a liquid, the battery also includes a separator in addition to the electrodes and the electrolyte. The separator is disposed as an insulator between the positive electrode and the negative electrode to prevent the occurrence of electrical short circuits. Specifically, in liquid lithium ion batteries, for example, a porous organic film is currently used as the separator. The electrolyte exchanges ions with the positive electrode and the negative electrode. In recent years, not only liquid electrolytic solutions but also solid electrolytes have been developed.

A metal foil that is used as a base material of the current collector preferably has high adhesiveness with respect to the electrode mixture layer. If the adhesiveness with respect to the electrode mixture layer is low, the electrode mixture layer will be liable to peel off from the metal foil for the current collector. As a result, an electrode that includes the metal foil for the current collector and the electrode mixture layer will not be able to sufficiently exhibit its function. Therefore, the metal foil for the current collector is required to have high adhesiveness to the electrode mixture layer. Japanese Patent Application Publication No. 2011-009207 (Patent Literature 1) and Japanese Patent Application Publication No. 2009-026491 (Patent Literature 2) propose metal foils for a current collector having improved adhesiveness to an electrode mixture layer.

The metal foil for a current collector disclosed in Patent Literature 1 is a rolled copper foil for a current collector of a lithium battery, and the surface roughness of an upper surface and a lower surface of the metal foil in a direction parallel to the rolling direction satisfies: 0.01 µm≤Ra≤0.10 µm and RSm≤20 µm. According to Patent Literature 1, this metal foil for a current collector has high adhesiveness to a negative electrode active material because minute irregularities are formed on the surfaces by controlling rolling conditions appropriately, rather than subjecting the metal foil to roughening processing.

The metal foil for a current collector disclosed in Patent Literature 2 includes a metal film formed by applying a dispersion liquid, in which metal microparticles are dispersed in a non-agglomerated state, onto a base material foil to form a coating film, and then heating the coating film in an inert atmosphere to cause agglomeration and deposition of the metal microparticles. The metal film has a substantially mountainous shape formed by protruding microparticles having pointed peaks and connected to each other, the protruding microparticles have a maximum particle size of 100 µm or less, and the metal film has a ten-point average roughness Rz specified in JIS B 0601-1994 of 0.4 to 10 µm. According to Patent Literature 2, if an electrode mixture layer made of Si or the like that constitutes an alloy-based negative electrode is formed on this metal foil for a current collector, the electrode mixture layer can be kept from, for example, peeling off even when the electrode mixture layer expands or contracts, and the adhesiveness is high.

### CITATION LIST

### PATENT LITERATURE

Patent Literature 1: Japanese Patent Application Publication No. 2011-009207
Patent Literature 2: Japanese Patent Application Publication No. 2009-026491

### SUMMARY OF INVENTION

### TECHNICAL PROBLEM

As described above, a metal foil for a current collector is required to have high adhesiveness to an electrode mixture layer. Patent Literatures 1 and 2 described above propose metal foils for a current collector having high adhesiveness to an electrode mixture layer. However, a metal foil for a current collector having high adhesiveness to an electrode mixture layer may also be obtained with a technology other than the technologies disclosed in Patent Literatures 1 and 2 described above.

In general, the discharge capacity of a battery increases with an increase in the volume of a component (e.g., an active material or an electrolyte) that is involved in storing electricity inside the battery. Also, in recent years, there is a demand to further reduce the size of batteries as mentioned above. That is to say, a severe restriction may be imposed on the volumetric capacity of a battery in the development of the battery. On the other hand, a current collector is not involved in storing electricity. An increase in the volume of the current collector results in a decrease in the volume of a component that is involved in storing electricity, due to the restriction on the volumetric capacity of a battery. In this case, there is a concern that the discharge capacity of the battery decreases.

Here, in Patent Literatures 1 and 2 described above, the adhesiveness to an electrode mixture layer is increased by forming irregularities on the surfaces of the metal foils for a current collector. If the adhesiveness to an electrode mixture layer is increased by forming irregularities on the surface of a metal foil for a current collector, the volume of the current collector increases due to the formation of the irregularities. In this case, there is a concern that the discharge capacity of the battery decreases due to the restriction on the volumetric capacity of the battery. That is to say, a metal foil for a current collector is required to have high adhesiveness to an electrode mixture layer while also maintaining the discharge capacity of a battery.

An object of the present disclosure is to provide a metal foil for a current collector that can have increased adhesiveness to an electrode mixture layer while maintaining the discharge capacity of a battery, an electrode in which the metal foil for a current collector is used, and a battery in which the electrode is used.

### SOLUTION TO PROBLEM

A metal foil for a current collector according to the present disclosure includes:
a base material; and
a plurality of composite bodies held on a surface of the base material,
wherein
the plurality of composite bodies include:
   Ni particles having an average particle size of 20 µm or less;
   a sintered body formed by sintering a plurality of the Ni particles; and
   a resin with a volume% of 14.0 to 40.0, and
   on a surface of the metal foil for a current collector,
   the number of peaks whose height from the surface of the base material is larger than 10 µm is 20.0 to 50.0 /mm, the peaks being identified through line roughness analysis.

An electrode according to the present disclosure includes:
the metal foil for a current collector; and
an electrode mixture layer formed on a surface of the metal foil for a current collector.

A battery according to the present disclosure includes:
the electrode; and
an electrolyte.

### ADVANTAGEOUS EFFECTS OF INVENTION

The metal foil for a current collector according to the present disclosure can have increased adhesiveness to an electrode mixture layer while maintaining the discharge capacity of a battery. In the electrode according to the present disclosure, the adhesiveness between the metal foil for a current collector and the electrode mixture layer is high. The battery according to the present disclosure can maintain its discharge capacity to some extent.

### BRIEF DESCRIPTION OF DRAWINGS

[FIG. 1] FIG. 1 is a diagram showing an example of a microscopic observation image of a metal foil for a current collector having a base material surface on which composite bodies of Ni particles and a resin were formed.
[FIG. 2] FIG. 2 is a diagram showing another example of a microscopic observation image of a metal foil for a current collector having a base material surface on which composite bodies of Ni particles and a resin were formed.
[FIG. 3] FIG. 3 is a diagram showing another example of a microscopic observation image of a metal foil for a current collector having a base material surface on which composite bodies of Ni particles and a resin were formed.

### DESCRIPTION OF EMBODIMENTS

The inventors of the present invention conducted studies regarding means for obtaining a metal foil for a current collector that can have increased adhesiveness to an electrode mixture layer while maintaining the discharge capacity of a battery. As a result, the inventors obtained the following findings.

First, the inventors focused on the surface of the metal foil for a current collector. If a metal foil having a smooth surface is used, there is a concern that the metal foil cannot have adhesiveness to an electrode mixture layer. In particular, a metal foil produced by cold rolling is likely to have an extremely smooth surface. The inventors thought that, even in such a case, it may be possible to increase the adhesiveness of the metal foil to an electrode mixture layer by roughening the surface of the metal foil.

On the other hand, a current collector itself is not involved in storing electricity as described above. That is to say, if large irregularities are formed on the surface of the metal foil for a current collector by roughening the surface of the metal foil, it may be possible to increase the adhesiveness of the metal foil to an electrode mixture layer, but there is a concern that the current collector occupies a larger proportion of the volume of a battery, reducing the discharge capacity of the battery. Therefore, the inventors conducted studies for forming minute irregularities on a base material surface of the metal foil with use of minute metal particles.

Specifically, the inventors focused on nickel (Ni) particles as the minute metal particles. Ni particles have a larger particle size than minute carbon particles such as carbon black. Therefore, if Ni particles are bound to each other and dispersed and held on the surface of the metal foil, it may be possible to form large irregularities. Furthermore, if Ni particles are dispersed and held on the surface of the metal foil, the electrical conductivity of the surface of the metal foil can be kept high owing to high corrosion resistance of the Ni particles. Therefore, if Ni particles are used, it may be possible to keep the contact resistance of the electrode low.

For the reasons described above, the inventors conducted studies for binding Ni particles to each other with a resin and holding the Ni particles on the base material surface of the metal foil. As a result of the studies conducted by the inventors, it was found that, if composite bodies formed by binding Ni particles to each other with a resin are held on a portion of the base material surface of the metal foil, large irregularities can be formed on the surface of the metal foil. Hereinafter, the composite bodies formed by binding Ni particles to each other with a resin will be simply referred to as "composite bodies" in the present description. The composite bodies held on the base material surface of the metal foil will be described specifically with reference to the drawings.

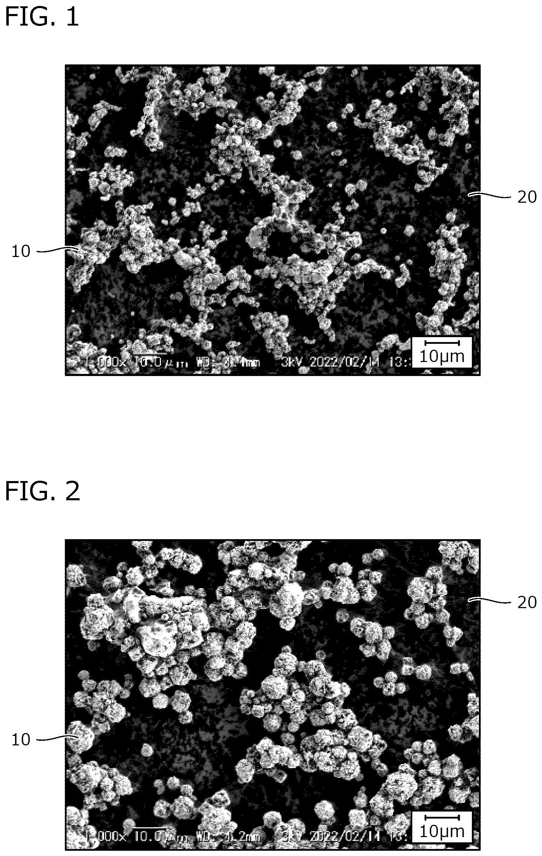

FIGS. 1 and 2 each show an example of a microscopic observation image of a metal foil for a current collector having a base material surface on which composite bodies of Ni particles and a resin were formed. FIGS. 1 and 2 were each obtained with use of a scanning electron microscope (SEM) by observing a secondary electron image of the metal foil for a current collector having the base material surface on which composite bodies of Ni particles and a resin were held. The composite bodies shown in FIGS. 1 and 2 were formed with use of Ni particles having different average particle sizes.

White regions 10 in FIGS. 1 and 2 are regions occupied by the Ni particles and the resin. Black regions 20 in FIGS. 1 and 2 are regions in which the Ni particles and the resin were absent and the base material surface was exposed. That is to say, it can be confirmed that, if the composite bodies of the Ni particles and the resin are formed on the base material surface, large irregularities can be formed on the surface of the metal foil for a current collector while keeping portions of the base material surface exposed. In this case, it may be possible to form large irregularities on the surface while suppressing the volume of the metal foil for a current collector to some extent.

As a result of detailed studies conducted based on the above findings, it was found that, in the metal foil for a current collector having the composite bodies formed on the surface of the base material, the density of composite bodies having at least a certain height affects the adhesiveness of the metal foil for a current collector to an electrode mixture layer. Therefore, in the present embodiment, the density of the composite bodies formed on the base material surface of the metal foil for a current collector is defined through line roughness analysis. Specifically, in the present embodiment, the number of peaks whose height from the base material surface is larger than 10 µm, which are identified through the line roughness analysis performed on the surface of the metal foil for a current collector, will also be referred to as "high spot count (HSC)". In the metal foil for a current collector according to the present embodiment, "peaks" identified through the line roughness analysis substantially correspond to the composite bodies. Accordingly, the HSC in the present embodiment substantially corresponds to the number of composite bodies formed with at least the certain height on an imaginary line segment with a length of 1 mm on the surface of the metal foil for a current collector.

If the HSC on the surface of the metal foil for a current collector is too small, the number of irregularities formed with the certain height on the surface of the metal foil for a current collector is too small. Consequently, the metal foil for a current collector cannot have sufficient adhesiveness to an clectrode mixture layer. On the other hand, if the HSC on the surface of the metal foil for a current collector is too large, gaps between the composite bodies become narrow, and it becomes difficult for an active material or a binder included in the electrode mixture layer to enter the gaps between the composite bodies. Consequently, the metal foil for a current collector cannot have sufficient adhesiveness to the electrode mixture layer. Moreover, in this case, there is a concern that the volume of the composite bodies becomes too large and the discharge capacity of a battery decreases. Accordingly, in the present embodiment, the HSC on the surface of the metal foil for a current collector is set to 20.0 to 50.0 /mm.

Accordingly, in the present embodiment, the HSC on the surface of the metal foil for a current collector is set to 20.0 to 50.0 /mm. As a result of more detailed studies conducted by the present inventors based on the above, it was found that the adhesiveness of the metal foil for a current collector to the electrode mixture layer and the discharge capacity of the battery are affected not only by the HSC but also by the size of the Ni particles, the proportion of the resin in the composite bodies, and the form of the Ni particles.

First, individual particles (primary particles) of the Ni particles in the present embodiment have an average particle size of 20 µm or less. If the average particle size of the primary particles is too large, it may be difficult to form the composite bodies of the Ni particles and the resin. Moreover, if the average particle size of the primary particles is too large, there is a concern that the volume of the composite bodies becomes too large and the discharge capacity of the battery decreases. Therefore, in the present embodiment, the average particle size of the Ni particles (primary particles) is set to 20 µm or less.

Also, the volume percentage of the resin in the composite bodies of the Ni particles and the resin is 14.0% to 40.0%. If the volume percentage of the resin is too high, the resin may fill gaps between Ni particles, and the surfaces of the composite bodies may become smooth. In this case, the adhesiveness of the metal foil for a current collector to the electrode mixture layer decreases. On the other hand, if the volume percentage of the resin is too low, the composite bodies of the Ni particles and the resin are unlikely to be held on the base material surface. In this case, the adhesiveness of the metal foil for a current collector to the electrode mixture layer decreases. Accordingly, in the present embodiment, the volume percentage of the resin in the composite bodies is set to 14.0% to 40.0%.

Furthermore, at least some of the Ni particles included in the composite bodies are sintered. Here, particles that are formed as a result of the Ni particles being sintered together will also be referred to as "sintered bodies". Void regions are formed inside the sintered bodies. Therefore, if the composite bodies include sintered bodies, an active material or a binder included in the electrode mixture layer enters the void regions inside the sintered bodies, and the adhesiveness of the metal foil for a current collector to the electrode mixture layer increases dramatically. Moreover, if the composite bodies include sintered bodies, the height of the composite bodies is likely to be high. This further increases the adhesiveness of the metal foil for a current collector to the clectrode mixture layer. Accordingly, in the present embodiment, the composite bodies include sintered bodies formed as a result of the Ni particles being sintered together.

The gist of a metal foil for a current collector, an electrode, and a battery according to the present embodiment that were completed based on the above findings is as follows.
[1] A metal foil for a current collector, including:
   a base material; and
   a plurality of composite bodies held on a surface of the base material,
   wherein
   the plurality of composite bodies include:
      Ni particles having an average particle size of 20 µm or less;
      a sintered body formed by sintering a plurality of the Ni particles; and
      a resin with a volume% of 14.0 to 40.0, and
      on a surface of the metal foil for a current collector,
      the number of peaks with a height larger than 10 µm from the surface of the base material is 20.0 to 50.0 /mm, the peaks being identified through line roughness analysis.
[2] The metal foil for a current collector according to [1], wherein:
   a mean thickness of the base material is 5 to 30 µm.
[3] An electrode including:
   the metal foil for a current collector according to [ 1 ] or [2]; and
   an electrode mixture layer formed on the surface of the metal foil for a current collector.
[4] A battery including:
   the electrode according to [3]; and
   an electrolyte.

The following describes the metal foil for a current collector according to the present embodiment, the electrode according to the present embodiment, and the battery according to the present embodiment.

### [Metal foil for current collector]

The metal foil for a current collector according to the present embodiment includes a base material and a plurality of composite bodies held on the surface of the base material.

### [Base material]

In the present embodiment, the base material is a metal foil. In the present description, the term "metal foil" means a metal sheet having a thickness of 50 µm or less. That is to say, the thickness of the base material of the metal foil for a current collector according to the present embodiment is 50 µm or less. The thinner the base material is, the smaller the volume of the metal foil for a current collector including the base material becomes. As a result, the volume of the current collector included in the volume of a battery can be suppressed, and the discharge capacity of the battery can be increased. However, if the base material is too thin, it becomes difficult to produce the base material and to produce the metal foil for a current collector with use of the base material. Note that, in the present description, the thickness of the base material means the mean thickness of the base material.

The base material is not particularly limited and is only required to be a metal foil, and a well-known metal foil can be used. The metal foil may be constituted by a single metal or an alloy, for example, or may be a metal foil having a plating layer on its surface. If the base material is a metal foil constituted by a single metal, the single metal may be copper, aluminum, iron, nickel, zinc, silver, gold, manganese, or platinum, for example. If the base material is a metal foil constituted by an alloy, the alloy may be an iron-based alloy (steel), a nickel-based alloy (Ni-based alloy), or a copper-based alloy, for example.

More specifically, if the base material is an iron-based alloy foil (steel foil), the base material may be a carbon steel foil, or may be a stainless steel foil. If the base material is a stainless steel foil, the type of stainless steel is not particularly limited, and the stainless steel foil may be, for example, a ferritic stainless steel foil, a martensitic stainless steel foil, an austenitic stainless steel foil, a duplex ferritic-martensitic stainless steel foil, or a duplex ferritic-austenitic stainless steel foil.

If the base material is a metal foil having a plating layer on its surface, a well-known plating layer can be used as the plating layer. In this case, the plating layer may be constituted by a single metal or an alloy. If the plating layer is constituted by a single metal, the plating layer may be a nickel plating layer, a copper plating layer, or a zinc plating layer, for example. The plating layer may be constituted by a single plating layer, or may include a plurality of plating layers.

It is more preferable that the base material is a steel foil having a nickel plating layer (Ni-plated steel foil) or a stainless steel foil. If the base material is a Ni-plated steel foil or a stainless steel foil, the base material has excellent strength, heat resistance, and corrosion resistance. Furthermore, in this case, an oxide film is unlikely to be formed on Ni particles included in the composite bodies, which will be described later, owing to the excellent corrosion resistance. Accordingly, the Ni particles serve as electrical contact points in an electrode produced using the metal foil for a current collector on which the composite bodies have been formed, and the electrical resistance of the electrode can be reduced. That is to say, if the base material is a Ni-plated steel foil or a stainless steel foil, synergistic effects of the base material and the Ni particles further improve the performance of a battery.

In the present embodiment, the upper limit of the thickness of the base material is preferably 45 µm, more preferably 40 µm, further preferably 35 µm, and further preferably 30 µm. In the present embodiment, the lower limit of the thickness of the base material is preferably 1 µm, more preferably 3 µm, and further preferably 5 µm. In short, in the present embodiment, the thickness of the base material is preferably 5 to 30 µm. In this case, the base material can be stably produced, and the discharge capacity of a battery including an electrode produced using the base material further increases.

### [Composite body]

In the metal foil for a current collector according to the present embodiment, a plurality of composite bodies are held on the surface of the base material. The plurality of composite bodies include Ni particles (primary particles) having an average particle size of 20 µm or less, a sintered body formed as a result of the Ni particles being sintered, and a resin. That is to say, in the present embodiment, it is sufficient that the plurality of composite bodies formed on the surface of the base material include the Ni particles, the sintered body, and the resin as a whole, and there is no need for all the composite bodies to include the Ni particles, the sintered body, and the resin.

Specifically, the composite bodies in the present embodiment are classified into the following three types.
Composite body A: composite body including the Ni particles, the sintered body, and the resin;
Composite body B: composite body including the sintered body and the resin and not including the Ni particles; and
Composite body C: composite body including the Ni particles and the resin and not including the sintered body.

Here, the composite bodies A and B form large irregularities on the surface of the base material and significantly increase the adhesiveness of the metal foil for a current collector to the electrode mixture layer. Therefore, in the present embodiment, the density of the composite bodies A and B is measured simulatively using the high spot count (HSC), which will be described later. On the other hand, the composite body C forms small irregularities on the surface of the base material, and therefore, hardly contributes to the adhesiveness of the metal foil for a current collector to the electrode mixture layer. However, the plurality of composite bodies held on the surface of the base material of the metal foil for a current collector according to the present embodiment may include composite bodies (composite bodies C) that do not include the sintered body.

Also, the composite bodies according to the present embodiment include the resin. Therefore, Ni particles and/or sintered bodies can be bound to each other. The resin further binds the composite bodies to the surface of the base material to hold the composite bodies on the surface of the base material. As a result, even if a certain degree of stress is applied during the production of the electrode, the shapes of the composite bodies are maintained, and the adhesiveness to the electrode mixture layer is maintained.

### [Ni particles]

In the present embodiment, the term "Ni particles" means primary particles among particles that are mainly composed of Ni. That is to say, the Ni particles may have a chemical composition composed of Ni and impurities, or may be constituted by a Ni-based alloy. In the present description, the term "primary particles" means individual particles that have not been sintered. In the present description, the average particle size of the Ni particles is 20 µm or less. Note that it is possible to use commercially available well-known Ni particles.

Ni particles have a larger particle size than, for example, carbon particles such as carbon black applied to base materials. Therefore, the composite bodies according to the present embodiment can form large irregularities on the surface of the base material to increase the adhesiveness of the metal foil for a current collector to the electrode mixture layer. On the other hand, if the average particle size of the Ni particles is too large, it may be difficult to form the composite bodies of the Ni particles and the resin. Moreover, if the average particle size of the Ni particles is too large, there is a concern that the volume of the composite bodies becomes too large and the discharge capacity of the battery decreases. Therefore, in the present embodiment, the average particle size of the Ni particles (primary particles) is set to 20 µm or less.

There is no particular limitation on the lower limit of the average particle size of the Ni particles. The lower limit of the average particle size of the Ni particles may be, for example, 0.1 µm, 0.5 µm, or 1 µm. A preferable lower limit of the average particle size of the Ni particles is 2 µm. If the average particle size of the Ni particles is 2 µm or more, the discharge capacity further increases due to an increase of void regions in the composite bodies including the Ni particles. Accordingly, the average particle size of the Ni particles is preferably 2 to 20 µm. The lower limit of the average particle size of the Ni particles is more preferably 3 µm, and further preferably 5 µm. The upper limit of the average particle size of the Ni particles is preferably 15 µm, and more preferably 10 µm. A method for determining the average particle size of the Ni particles will be described later.

### [Sintered body]

In the present embodiment, the term "sintered body" means a cluster formed as a result of the Ni particles (primary particles) being sintered together. Ni particles forming the sintered body are bound together with a force stronger than the force binding agglomerating Ni particles. Accordingly, void regions are formed inside sintered bodies included in the composite bodies. As a result, a portion of an active material or a binder included in the electrode mixture layer enters the void regions, and the adhesiveness of the metal foil for a current collector to the electrode mixture layer increases dramatically. Moreover, if the composite bodies include sintered bodies, the height of the composite bodies is likely to be high. As a result, the adhesiveness of the metal foil for a current collector to the electrode mixture layer further increases.

The larger the amount of sintered bodies included in the composite bodies is, the higher the proportion of void regions included in the composite bodies becomes. In this case, irregularities formed by the composite bodies on the surface of the metal foil for a current collector become larger, and the volume of the metal foil for a current collector becomes smaller. As a result, the adhesiveness of the metal foil for a current collector to the electrode mixture layer becomes higher and the discharge capacity of the battery is unlikely to decrease. Therefore, the larger the amount of sintered bodies included in the composite bodies is, the better. However, in the present embodiment, it is not essential that all of the plurality of composite bodies include sintered bodies. In the metal foil for a current collector according to the present embodiment, the effects described in the present embodiment can be obtained if at least some of the plurality of composite bodies formed on the surface of the base material include sintered bodies. A method for identifying sintered bodies included in the composite bodies will be described later.

In the present embodiment, the following methods can be used to measure the average particle size of the Ni particles and to confirm the presence or absence of sintered bodies. Specifically, a test specimen for SEM observation is prepared from the metal foil for a current collector according to the present embodiment. The test specimen is prepared through CP (CROSS SECTION POLISHER: registered trademark) processing using Ar ion beams. Specifically, first, the metal foil for a current collector according to the present embodiment is fixed to a Si wafer with an adhesive. The CP processing is performed on the Si wafer to which the metal foil for a current collector has been fixed, using a CP cross section specimen production device. Through the above steps, a test specimen having a cross section of the metal foil for a current collector as an observation surface is prepared.

The observation surface of the prepared test specimen is observed with use of a scanning electron microscope (SEM) by taking secondary electron images of 10 fields of view. The area of each field of view is, for example, 0.02 mm² (1 000x magnification). It is possible to identify Ni particles in each field of view based on the contrast. At this time, if not only a plurality of Ni particles are adjacent to each other, but also a void region is formed by the plurality of Ni particles, it can be determined that the plurality of Ni particles have been sintered.

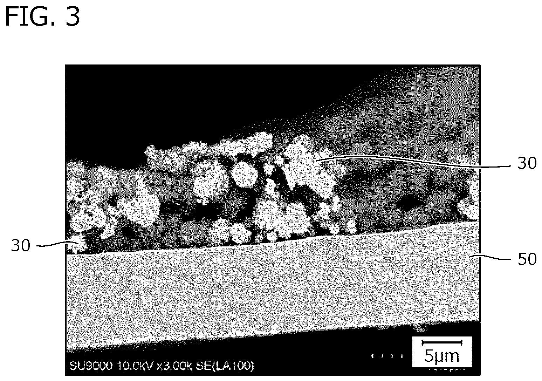

This point will now be described in more detail using the drawings. FIG. 3 shows another example of a microscopic observation image of a metal foil for a current collector having a base material surface on which composite bodies of Ni particles and a resin were formed. FIG. 3 is a backscattered electron image obtained in SEM observation of a cross section of the metal foil for a current collector according to the present embodiment taken along the thickness direction by the CP processing. Note that the image shown in FIG. 3 was obtained by observing the cross section at 3000x magnification. A lower region 50 in FIG. 3 shows the base material (metal foil) of the metal foil for a current collector. White regions 30 in FIG. 3 correspond to cut surfaces of Ni particles.

As shown in FIG. 3, it can be confirmed that the cut surfaces 30 of the Ni particles in the image include cut surfaces having circular outlines and cut surfaces having outlines with complex shapes. More specifically, it can be confirmed that the cut surface 30 of the Ni particles near the center of FIG. 3 was formed by at least three Ni particles bound together into a single piece. As described above, if it is confirmed from a cut surface that Ni particles are bound together into a single piece, rather than outer surfaces of the Ni particles being merely in contact with each other, it can be determined that the plurality of Ni particles have been sintered.

Furthermore, the particle size of primary particles of the Ni particles can be determined as follows. At least 100 Ni particles are arbitrarily identified in 10 fields of view as described above. Particle sizes of the identified Ni particles are determined through image analysis. An arithmetic average value of the determined particle sizes of the Ni particles is defined as the average particle size (µm) of the Ni particles. Note that the first decimal place of the obtained value of the average particle size of the Ni particles is rounded off.

Note that the following methods can also be used to measure the average particle size of the Ni particles and to confirm the presence or absence of sintered bodies. Specifically, if a composition that is used to produce the metal foil for a current collector is used to measure the average particle size of the Ni particles and to confirm the presence or absence of sintered bodies, the measurement and the confirmation can be performed more easily, compared with the above methods. Specifically, particle size distribution of Ni particles contained in the composition is measured with use of a laser diffraction particle size distribution analyzer (MICROTRAC FRA manufactured by MicrotracBEL Corp.).

If the Ni particles include not only primary particles but also sintered bodies, a histogram of the particle size and the frequency includes two peaks. That is to say, the particle size distribution is bimodal in this case. At this time, assuming that the two peaks each have a normal distribution, the peak with a smaller particle size and the peak with a larger particle size are separated. The thus identified particle size (µm) indicating the mode of the peak with the smaller particle size is defined as the average particle size (µm) of the Ni particles (primary particles). Note that in this case as well, the first decimal place of the obtained value of the average particle size of the Ni particles is rounded off.

Also, if the Ni particles include not only primary particles but also sintered bodies, the particle size distribution is bimodal as described above. Therefore, in the present embodiment, if the particle size distribution is bimodal and the frequency of the peak with a larger particle size is higher than 1/5 of the frequency of the peak with a smaller particle size, it can be determined that the particles also include sintered bodies.

Note that the average particle size of the Ni particles included in the metal foil for a current collector according to the present embodiment can be determined with use of either of the above methods. Approximately the same values will be obtained as the average particle size of the Ni particles when the above methods are used. Likewise, the presence or absence of sintered bodies in the metal foil for a current collector according to the present embodiment can be confirmed with use of either of the above methods. Similar results will be obtained regarding the presence or absence of sintered bodies when the above methods are used.

### [Resin]

In the present embodiment, the resin binds the Ni particles and the sintered bodies to form composite bodies. In the present embodiment, the resin is not particularly limited, and a well-known resin can be used. The resin may be, for example, a water-based resin or an organic solvent-based resin. Examples of the water-based resin include polyvinyl alcohol (PVA), carboxymethylcellulose (CMC), polyacrylic acid (PAA), and styrene-butadiene rubber (SBR). Examples of the organic solvent-based resin include polymethylmethacrylate (PMMA), polytetrafluoroethylene (PTFE), polyimide (PI), polyamide (PA), and polyvinylidene fluoride (PVdF).

Preferably, the resin used for the composite bodies in the metal foil for a current collector according to the present embodiment is a water-based resin. The environmental load of the production of water-based resins is small. Therefore, water-based resins are widely used as binders in an electrode mixture layer of an electrode, which will be described later. More preferably, the resin used for the composite bodies in the metal foil for a current collector according to the present embodiment is styrene-butadiene rubber (SBR).

In the present embodiment, the volume percentage of the resin is 14.0% to 40.0%. If the volume percentage of the resin is too high, the resin may fill gaps between Ni particles, and surfaces of the composite bodies may become smooth. In this case, the adhesiveness of the metal foil for a current collector to the electrode mixture layer decreases. On the other hand, if the volume percentage of the resin is too low, the composite bodies of the Ni particles and the resin are unlikely to be held on the base material surface. In this case, the adhesiveness of the metal foil for a current collector to the electrode mixture layer decreases. Accordingly, in the present embodiment, the volume percentage of the resin in the composite bodies is 14.0% to 40.0%.

The lower limit of the volume percentage of the resin is preferably 16.0%, more preferably 18.0%, and further preferably 20.0%. The upper limit of the volume percentage of the resin is preferably 38.0%, more preferably 36.0%, and further preferably 35.0%.

In the present embodiment, the volume percentage of the resin can be determined using the following method. Specifically, elemental analysis is performed on the above-described test specimen for SEM observation, which is used to measure the average particle size of the Ni particles, with use of an electron probe micro analyzer (hereinafter also referred to as "EPMA"). Preferably, a field emission electron probe micro analyzer (FE-EPMA) is used as the EPMA. In the elemental analysis performed using the EPMA, a wavelength dispersive X-ray spectrometer (hereinafter also referred to as "WDX") is used to detect characteristic X-rays.

More specifically, secondary electron images of 10 fields of view are observed with use of an SEM as in the above-described measurement of the average particle size of the Ni particles. The area of each field of view is, for example, 0.02 mm² (1000x magnification). In each measurement field of view, elemental analysis is performed using the EPMA to generate an elemental map. Note that, in the elemental analysis performed using the EPMA and WDX, target elements are Ni, Fe, C, and O. Based on the result of the elemental analysis, regions in which C is detected are defined as regions occupied by the resin. The proportion of an area of regions occupied by the resin in the observation fields of view is determined. In the present embodiment, the Ni particles and the resin are present at random, and therefore, the difference between the proportion of the area and the volume percentage is small. Therefore, in the present embodiment, the proportion of the area occupied by the resin is defined as the volume percentage (%) of the resin. Note that the second decimal place of the obtained value of the volume percentage of the resin is rounded off.

Note that the volume percentage of the resin can also be determined using the following method. Specifically, the volume percentage of the resin can be determined based on the mixing weight ratio of the composition used to produce the metal foil for a current collector. For example, the specific gravity of styrene-butadiene rubber (SBR) is 0.97, the specific gravity of carboxymethylcellulose (CMC) is 1.6, and the specific gravity of polyvinylidene fluoride (PVdF) is 1.78. The volume percentage of the resin can be determined further using the specific gravity of the Ni particles. Note that the specific gravity of the Ni particles is 8.9, for example. With this method, it is possible to obtain approximately the same value as the volume percentage of the resin determined using the above-described method using the SEM.

### [High spot count (HSC)]

In the metal foil for a current collector according to the present embodiment, the number (HSC: High Spot Count) of peaks whose height from the base material surface is larger than 10 µm, which are identified through line roughness analysis performed on the surface of the metal foil, is 20.0 to 50.0 /mm. As described above, "peaks" identified through the line roughness analysis substantially correspond to the composite bodies. Accordingly, the HSC in the present embodiment substantially corresponds to the number of composite bodies that are formed with at least a certain height on an imaginary line segment with a length of 1 mm on the surface of the metal foil for a current collector.

If the HSC on the surface of the metal foil for a current collector is too small, the number of irregularities having at least the certain height on the surface of the metal foil for a current collector is too small. Consequently, the metal foil for a current collector cannot have sufficient adhesiveness to the electrode mixture layer. On the other hand, if the HSC on the surface of the metal foil for a current collector is too large, gaps between the composite bodies become narrow, and an active material or a binder included in the electrode mixture layer is unlikely to enter the gaps between the composite bodies. Consequently, the metal foil for a current collector cannot have sufficient adhesiveness to the electrode mixture layer. Moreover, in this case, there is a concern that the volume of the composite bodies becomes too large and the discharge capacity of the battery decreases.
Accordingly, in the present embodiment, the HSC on the surface of the metal foil for a current collector is set to 20.0 to 50.0 /mm.

In the present embodiment, the lower limit of the HSC on the surface of the metal foil for a current collector is preferably 21.0 /mm, more preferably 25.0 /mm, and further preferably 30.0 /mm. The upper limit of the HSC on the surface of the metal foil for a current collector is preferably 48.0 /mm, more preferably 46.0 /mm, and further preferably 42.0 /mm.

In the present embodiment, the HSC on the surface of the metal foil for a current collector can be determined using the following method. Specifically, line roughness analysis is performed on the surface of the metal foil for a current collector according to the present embodiment, and a roughness profile is obtained. Note that a primary profile for obtaining the roughness profile is determined using a method in accordance with JIS B 0601 (2013). More specifically, the surface of the metal foil for a current collector according to the present embodiment is subjected to line roughness measurement using a shape measurement laser microscope. The shape measurement laser microscope is not particularly limited, and for example, a device with the trade name "Shape Measurement Laser Microscope VK-X 100" manufactured by Keyence Corporation can be used. In the line roughness measurement, the magnification is set to 2000x. Although an evaluation length is not particularly limited, for example, the evaluation length is set to 100 to 150 µm.

The primary profile is obtained from the results of the line roughness measurement in accordance with JIS B 0601 (2013). The roughness profile is obtained by applying a low-pass filter with a sampling length of 2.5 µm to the obtained primary profile. Note that it may not be possible to identify the height position of the base material surface in the roughness profile depending on the average particle size of the Ni particles. In this case, the height position of the base material surface may be defined by peeling off a portion of the surface of the metal foil for a current collector. In this case, it is preferable to perform the line roughness analysis with respect to a plurality of regions such that the total evaluation length is 100 µm or more in regions where the surface has not been peeled off.

If the base material (metal foil) is produced through rolling, the line roughness measurement is preferably performed in a direction that is perpendicular to the rolling direction of the base material. That is to say, if the length direction of the base material is parallel to the rolling direction, the line roughness measurement is preferably performed along the width direction of the base material. The rolling direction of the base material is identified by microscopically observing the surface of the metal foil for a current collector. However, even those skilled in the art may not be able to identify the rolling direction of the base material by microscopically observing the surface of the metal foil for a current collector. In such a case, the direction in which the line roughness measurement is performed need not be perpendicular to the rolling direction.

With respect to the obtained roughness profile, a reference line is drawn at a position 10 µm above the base material surface (in the direction from the metal foil for a current collector toward a space, or the height direction from the base material surface). Portions of the roughness profile above the reference line are defined as "peaks", and the number of peaks is counted. The number of peaks is divided by the evaluation length, and the obtained value is defined as the high spot count (HSC) (/mm). Note that the second decimal place of the obtained value of the high spot count (HSC) is rounded off.

### [Electrode]

The electrode according to the present embodiment includes the metal foil for a current collector described above, and an electrode mixture layer that is formed on the surface of the metal foil for a current collector. The electrode according to the present embodiment may be a positive electrode or may be a negative electrode. That is to say, the electrode is not particularly limited as long as it includes the aforementioned metal foil for a current collector and the electrode mixture layer.

### [Electrode mixture layer]

In the present embodiment, the electrode mixture layer is not particularly limited, and it is sufficient that the electrode mixture layer has a well-known constitution. The electrode mixture layer includes an active material. The electrode mixture layer may further include a binder, or may include a composition other than the active material and the binder. In this case, the electrode mixture layer includes, for example, a conductive auxiliary agent. The conductive auxiliary agent helps to improve the electronic conductivity. In the present embodiment, the binder is not particularly limited, and a well-known binder can be used. The binder used in the electrode mixture layer is preferably of the same type as the resin used in the composite bodies described above.

### [Active material]

In the present embodiment, the active material is not particularly limited, and a well-known active material can be used. The active material is composed of powder particles that do not dissolve in an electrolyte, which will be described later. If the electrode is a negative electrode, the negative electrode active material may be, for example, a carbon-based material such as graphite, an alloy material such as a CuSn alloy or a NiTiSi alloy, or a Si-based material such as SiO. If the electrode is a positive electrode, the positive electrode active material may be, for example, lithium cobalt oxide, a ternary material, lithium manganate, or lithium iron phosphate. That is to say, the positive electrode active material and the negative electrode active material are not particularly limited, and may have well-known compositions.

The electrode according to the present embodiment includes the metal foil for a current collector described above and a well-known electrode mixture layer that is formed on the surface of the metal foil for a current collector. As a result, the electrode according to the present embodiment makes it possible to maintain the discharge capacity of a battery, and the adhesiveness between the metal foil for a current collector and the electrode mixture layer is high.

### [Battery]

The battery according to the present embodiment includes the aforementioned electrode and an electrolyte. If the battery according to the present embodiment is a liquid secondary battery, the battery also includes a separator in addition to the electrode and the electrolyte. The battery according to the present embodiment is not particularly limited as long as the battery includes the electrode including the metal foil for a current collector described above, and the remaining configuration of the battery may be a well-known configuration. The shape of the battery according to the present embodiment is not particularly limited, and may be a cylindrical shape, a rectangular shape, a coin shape, or a sheet shape. Also, the battery according to the present embodiment may be a secondary battery or may be a primary battery. If the battery according to the present embodiment is a secondary battery, the battery may be a non-aqueous electrolyte secondary battery, an aqueous electrolyte secondary battery, or an all-solid-state secondary battery, for example.

### [Electrolyte]

In the case of a liquid battery, the electrolyte exchanges ions with the positive electrode and the negative electrode via an electrolytic solution. In the case of an all-solid-state battery, the electrolyte exchanges ions directly with the positive electrode and the negative electrode. In the present embodiment, the electrolyte is not particularly limited, and a well-known electrolyte can be used.

The battery according to the present embodiment includes the aforementioned electrode and a well-known electrolyte. As a result, in the battery according to the present embodiment, the discharge capacity can be maintained, and the adhesiveness between the metal foil for a current collector and the electrode mixture layer is high.

### [Adhesiveness]

The metal foil for a current collector according to the present embodiment has high adhesiveness with respect to the electrode mixture layer. In the present embodiment, the adhesiveness of the metal foil for a current collector with respect to the electrode mixture layer is evaluated using the following method.

A test specimen is prepared from the metal foil for a current collector according to the present embodiment. Specifically, a composition of the electrode mixture layer is applied onto the metal foil for a current collector and dried, and then a test specimen is cut out. The metal foil for a current collector has a length of 210 mm and a width of 150 mm, for example. Although the composition of the electrode mixture layer is not particularly limited, the composition is obtained by, for example, mixing NiTiSi alloy powder, styrene-butadiene rubber (SBR), and carboxymethylcellulose (CMC) at a ratio of 95:4:1, and kneading the mixture. Note that, in this case, water is used as a solvent. The composition of the electrode mixture layer is applied onto the test specimen with an applicator having a coating width of 80 mm and a gap of 150 µm.

The applied composition is dried by being heated at 75°C for 20 minutes. A test specimen is cut out from the electrode after drying. The test specimen has a width of 15 mm and a length of 50 mm or more. At this time, it is preferable to cut out the test specimen such that a coated portion with a length of 30 mm or more and an uncoated portion with a length of 5 mm or more are included in the test specimen (with the length of 50 mm or more). Furthermore, it is preferable that the length direction of the test specimen is parallel to the rolling direction of the base material. The test specimen on which the electrode mixture layer has been formed is prepared using the above method. A 90° peeling test described in JIS Z 0237 (2009) is performed on the test specimen. If a high peel strength is obtained in the 90° peeling test, it is determined that the adhesiveness of the metal foil for a current collector to the electrode mixture layer is high.

### [Discharge capacity]

The metal foil for a current collector according to the present embodiment makes it possible to maintain the discharge capacity even if the adhesiveness to the electrode mixture layer is increased. In the present embodiment, the discharge capacity is evaluated using the following method.

Specifically, if the thickness of the metal foil on which composite bodies are formed is the same (e.g., 50 µm), the higher the volume ratio of the composite bodies becomes, the lower the discharge capacity of a battery formed using the metal foil becomes. Therefore, the volume ratio of the composite bodies is calculated, and it is determined that the discharge capacity decreases by an amount corresponding to the volume of the composite bodies. The volume ratio of the composite bodies can be calculated from the weight of an applied composition, specific gravities of components (Ni particles, sintered bodies, and a resin) of the composition, and a mixing ratio between the components. It is determined that, if the volume ratio of the composite bodies is small, the discharge capacity of a battery produced using the metal foil for a current collector can be maintained.

### [Method for producing metal foil for current collector]

The following describes an example of a method for producing the metal foil for a current collector according to the present embodiment. The production method described below is one example for producing the metal foil for a current collector according to the present embodiment, and the method for producing the metal foil for a current collector according to the present embodiment may be a production method other than the production method described below. However, the production method described below is one preferable example of the method for producing the metal foil for a current collector according to the present embodiment. The method for producing the metal foil for a current collector according to the present embodiment includes a base material preparation process, a composition preparation process, and a composite body formation process.

### [Base material preparation process]

In the base material preparation process, the base material of the metal foil for a current collector is prepared. The method for preparing the base material is not particularly limited, and a well-known method may be used. As the method for preparing the base material, for example, an intermediate steel material having a desired chemical composition may be prepared, and the intermediate steel material may be subjected to cold working to prepare the base material. The following specifically describes this case.

The intermediate steel material having the desired chemical composition can be appropriately set according to the mechanical properties of the base material to be obtained. Here, the term "intermediate steel material" means a steel sheet having a thickness of several hundred µm to several mm. The intermediate steel material may be a stainless steel sheet or may be a plated steel sheet.

In the case of preparing the base material by subjecting the intermediate steel material to cold working, a preferable method of cold working is cold rolling. The cold rolling can be performed using well-known equipment. For example, a plurality of reversing cold rolling mills may be used. In this case, the reduction rate in the cold rolling is not particularly limited. An appropriate reduction rate can be set according to the thickness of the base material to be obtained. Furthermore, the base material after cold rolling may be subjected to an appropriate heat treatment.

As described above, the base material is prepared in the base material preparation process. The base material may be produced by the aforementioned preferable process, or may be a base material produced by a third party, or may be a base material that is produced in a factory other than the factory where the composition preparation process, which will be described later, is performed or at a different place of business. In short, the base material preparation process in the present embodiment is not particularly limited, and a well-known method may be used.

Note that, as mentioned above, the base material may have a plating layer on its surface. In the case of forming a plating layer on the surface of the base material, preferably, cold rolling is performed after the plating layer is formed on the surface of the intermediate steel material. In this case, the plating layer on the surface of the base material can be formed thinly. Preferably, a Ni plating layer is formed on the surface of the intermediate steel material. In this case, for example, the intermediate steel material (with a thickness of several hundred µm) having the Ni plating layer is subjected to cold rolling to obtain the base material having a thickness of 50 µm or less. Note that the method for forming the Ni plating layer is not particularly limited, and a well-known method may be used.

### [Composition preparation process]

In the composition preparation process, a composition for forming and holding composite bodies on the surface of the base material is prepared. It is possible to prepare Ni particles, sintered bodies, and a resin included in the composition by purchasing commercially available Ni particles, sintered bodies, and resin as appropriate.

Note that the Ni particles may have been heated at a high temperature during their manufacturing process. Accordingly, a portion of commercially available well-known Ni particles may have been sintered. That is to say, if well-known Ni particles are purchased, the Ni particles may be a mixture of Ni particles (primary particles) and sintered bodies. In this case, composite bodies formed using a method described below may include the sintered bodies. On the other hand, when a certain degree of stress or higher stress is applied to the mixture of sintered bodies and Ni particles, the sintered bodies are crushed. Therefore, it is preferable to purchase Ni particles in which sintered bodies are mixed from a third party in the composition preparation process according to the present embodiment. Moreover, in this case, it is preferable to give consideration to stress applied to the composition, so that the sintered bodies will not be crushed when the composition is mixed.

The prepared Ni particles, sintered bodies, and resin are mixed using a solvent as necessary. Specifically, it is preferable to use a planetary centrifugal mixer for mixing. In this case, a solvent is further used to appropriately control the viscosity. The solvent may be water or an organic solvent such as N-methyl-2-pyrrolidone (NMP).

### [Composite body formation process]

In the composite body formation process, the prepared composition is used to form and hold composite bodies on the surface of the base material. Specifically, the mixed composition is applied onto the surface of the aforementioned base material. There is no particular limitation on the application method, and it is possible to use a doctor blade method using a doctor blade having a gap, or a coating method such as spray coating or gravure coating.

The base material to which the composition has been applied is dried to form composite bodies on the surface of the base material. The drying method is not particularly limited, and a well-known method may be used. For example, the base material may be dried by being heated at 75°C for 20 minutes. Alternatively, the base material may be dried without being heated. Note that the composition for forming the composite bodies according to the present embodiment includes the solvent. Therefore, even if the resin including the solvent enters void regions inside sintered bodies, the regions become voids again after the drying. It is supposed that such void regions are formed because the binding force of sintering is stronger than that of agglomeration or the like.

By performing the above processes, the metal foil for a current collector according to the present embodiment can be produced. Note that, as mentioned above, the production process described above is one preferable example for producing the metal foil for a current collector according to the present embodiment, and the method for producing the metal foil for a current collector according to the present embodiment is not limited to the method described above.

### [Method for producing electrode]

One example of a method for producing an electrode using the metal foil for a current collector according to the present embodiment is as follows. The method for producing an electrode according to the present embodiment includes an electrode mixture preparation process and an electrode mixture layer formation process.

### [Electrode mixture preparation process]

In the electrode mixture preparation process, a composition for forming an electrode mixture layer is prepared. It is sufficient to prepare the composition for forming an electrode mixture layer according to the electrode mixture layer to be obtained. For example, the composition may be prepared by kneading an active material and a binder. For example, the composition may also be prepared by kneading an active material, a binder, and a conductive auxiliary agent. For example, the composition may be prepared by kneading an active material, a binder, and a solvent. For example, the composition may also be prepared by kneading an active material, a binder, a conductive auxiliary agent, and a solvent. The kneading method is appropriately adjusted according to the active material, the binder, the conductive auxiliary agent, and the solvent. That is to say, the electrode mixture preparation process may be performed using a well-known method.

### [Electrode mixture layer formation process]

In the electrode mixture layer formation process, the electrode mixture layer is formed on the surface of the aforementioned metal foil for a current collector. Specifically, the kneaded composition for forming an electrode mixture layer is applied onto the aforementioned metal foil for a current collector. The application method is not particularly limited, and a well-known method may be used. For example, the composition may be applied onto the metal foil for a current collector using an applicator including a gap. For example, it is also possible to use a spray to apply the composition onto the metal foil for a current collector by spraying.

The composition applied onto the metal foil for a current collector is dried to form the electrode mixture layer. The drying method is not particularly limited, and a well-known method may be used. For example, the composition may be dried by being heated at 75°C for 20 minutes. Alternatively, the composition may be dried without being heated.

By performing the above processes, the electrode according to the present embodiment can be produced. Note that, as mentioned above, the production process described above is one preferable example for producing the electrode according to the present embodiment, and the method for producing the electrode according to the present embodiment is not limited to the method described above.

### [Method for producing battery]

There is no particular limitation on the method for producing the battery according to the present embodiment. To produce the battery according to the present embodiment, a laminated product in which the aforementioned electrode and a counter electrode are laminated is produced using a well-known method. The laminated product is housed in a case to produce the battery.

### EXAMPLES

Base materials of test numbers shown in Table 1 were prepared. The base material of each test number was formed into a rectangular shape with a length of 210 mm and a width of 150 mm in such a manner that the longitudinal direction was parallel to the rolling direction. The term "Ni-plated steel foil" in the column "Base Material" in Table 1 means a Ni-plated steel foil having a thickness of 10 µm. The Ni-plated steel foil was prepared by subjecting a Ni-plated steel sheet having a thickness of 200 µm to cold rolling. Note that the base metal of the Ni-plated steel foil was ultra-low carbon steel. The term "Stainless steel foil 1" in the column "Base Material" in Table 1 means a ferritic stainless steel foil having a thickness of 10 µm and corresponding to SUS430 defined in JIS G 4305 (2012). The term "Stainless steel foil 2" in the column "Base Material" in Table 1 means a ferritic stainless steel foil having a thickness of 10 µm and corresponding to SUS444 defined in JIS G 4305 (2012).

### [Table 1]

**TABLE 1**

| Test No. | Base Material | Composition for Forming Composite Bodies | | | | | Application Amount (mg/cm²) |
|---|---|---|---|---|---|---|---|
| | | Particles | Mixing Ratio (Solid Content Weight Ratio) | | | | |
| | | | Particles | Resin | | | |
| | | | | SBR | CMC | PVdF | |
| 1 | Ni-plated steel foil | - | - | - | - | - | - |
| 2 | Ni-plated steel foil | Ni-A | 95 | 4 | 1 | - | 3.48 |
| 3 | Ni-plated steel foil | Ni-B | 95 | 4 | 1 | - | 2.88 |
| 4 | Ni-plated steel foil | Ni-B | 95 | 4 | 1 | - | 2.03 |
| 5 | Ni-plated steel foil | Ni-B | 94 | 5 | 1 | - | 0.75 |
| 6 | Ni-plated steel foil | Ni-B | 94 | 5 | 1 | - | 2.93 |
| 7 | Ni-plated steel foil | Ni-B | 94 | - | - | 6 | 3.39 |
| 8 | Stainless steel foil 1 | Ni-B | 95 | 4 | 1 | - | 2.85 |
| 9 | Stainless steel foil 2 | Ni-B | 95 | 4 | 1 | - | 2.05 |
| 10 | Ni-plated steel foil | Ni-E | 95 | 4 | 1 | - | 4.11 |
| 11 | Ni-plated steel foil | Ni-C | 94 | 5 | 1 | - | 2.99 |
| 12 | Ni-plated steel foil | Ni-A | 92 | 7 | 1 | - | 0.91 |
| 13 | Ni-plated steel foil | Ni-B | 92 | 7 | 1 | - | 0.88 |
| 14 | Ni-plated steel foil | Ni-B | 95 | 4 | 1 | - | 1.52 |
| 15 | Ni-plated steel foil | Ni-B | 95 | 4 | 1 | - | 0.60 |
| 16 | Ni-plated steel foil | Ni-D | 95 | 4 | 1 | - | - |
| 17 | Ni-plated steel foil | Ni-B | 98 | 1 | 1 | - | 2.53 |
| 18 | Ni-plated steel foil | C | 92 | 7 | 1 | - | 0.64 |

With respect to each test number, a composition for forming composite bodies on the surface of the base material was prepared. Specifically, the composition was prepared using particles and resins shown in Table 1. Note that composite bodies were not formed in Test No. 1. "Ni-A" in the column "Particles" in Table 1 means Ni particles that had a chemical composition composed of Ni and impurities and whose primary particles had an average particle size of 8 µm. The Ni particles used were Ni particles of product No. NI-314010 manufactured by the Nilaco Corporation. "Ni-B" in the column "Particles" in Table 1 means Ni particles that had a chemical composition composed of Ni and impurities and whose primary particles had an average particle size of 5 µm. The Ni particles used were Ni particles of product No. C-255 manufactured by Vale Inco Ltd.

"Ni-C" in the column "Particles" in Table 1 means the same Ni particles as the particles "Ni-B", in which sintered bodies had been crushed in advance through strong kneading. Specifically, 10 g of the particles "Ni-B" and 8.5 g of water were mixed, and the mixture was subjected to processing for 2 minutes using a planetary centrifugal kneader (product No. ARE250 manufactured by THINKY CORPORATION) at a circumferential velocity of 30 m/sec to crush the sintered bodies.

"Ni-D" in the column "Particles" in Table 1 means Ni particles that had a chemical composition composed of Ni and impurities and whose primary particles had an average particle size of 53 µm or less. The Ni particles used were Ni particles of product No. NIE18PB manufactured by Kojundo Chemical Laboratory Co., Ltd. "C" in the column "Particles" in Table 1 means that carbon particles were used, rather than Ni particles. The carbon particles had an average particle size of 1 µm. "Ni-E" in the column "Particles" in Table 1 means Ni particles that had a chemical composition composed of Ni and impurities and whose primary particles had an average particle size of 0.4 µm. The Ni particles used were ultra fine nickel powder (particle size: 400 nm) manufactured by TOHO TITANIUM CO., LTD.

"SBR" in the column "Resin" in Table 1 means styrene-butadiene rubber. The SBR used was SBR of product No. TRD2001 manufactured by JSR Corporation. "CMC" in the column "Resin" in Table 1 means carboxymethylcellulose. The CMC used was CMC of product No. 2110 manufactured by Daicel Corporation. "PVdF" in the column "Resin" in Table 1 means polyvinylidene fluoride. The PVdF used was PVdF of product No. KFP9100 manufactured by KUREHA CORPORATION.

As for each of Test Nos. 2 to 18, the composition obtained by mixing the components at a weight ratio shown in Table 1 was mixed using a planetary centrifugal kneader. Note that SBR and CMC are water-based resins, and therefore, water was used as a solvent. PVdF is an organic solvent-based resin, and therefore, N-methyl-2-pyrrolidone (NMP) was used as a solvent.

As for each of Test Nos. 2 to 18, the prepared composition was applied onto the surface of the base material. An automatic coating apparatus (model No. IMC-70F0 manufactured by Imoto machinery Co., LTD) was used for the application. The base material was fixed to a stage of the automatic coating apparatus by vacuum suctioning and the composition was applied using an applicator. At this time, the application amount was controlled by setting a gap distance of the applicator to 25 to 50 µm, and the application speed was set to 20 mm/s. The application amount of the composition to the surface of the base material was adjusted by changing the gap distance of the applicator.

As for Test Nos. 2 to 18, the base material was dried by being held in a dryer set to 75°C for 20 minutes. A metal foil for a current collector was produced as described above.

As for the metal foil for a current collector of each test number produced as described above, the application amount of the composition was calculated, the presence or absence of sintered bodies of composite bodies was confirmed, the volume percentage of the resin in the composite bodies was calculated, the HSC was measured, an adhesiveness test was carried out, and the discharge capacity was evaluated. Note that composite bodies were not formed in Test No. 1, and therefore, only the adhesiveness test and evaluation of the discharge capacity were performed for Test No. 1. In Test No. 16, the Ni particles were too large and were dragged by the applicator when the composition was applied, and composite bodies could not be formed. Therefore, the tests described above were not performed.

### [Calculation of composition application amount)

As for each test number other than Test Nos. 1 and 16, the application amount of the composition was calculated. Specifically, a portion of the metal foil for a current collector of each test number other than Test Nos. 1 and 16 was punched out with a punch having a diameter of 13 mm. As for each test number other than Test Nos. 1 and 16, the application amount (mg/cm²) was calculated from a difference in weight from Test No. 1 and the area of the punched out portion. The obtained application amount is shown in Table 1.

### [Confirmation of presence or absence of sintered bodies of composite bodies]

As for the metal foil for a current collector of each test number other than Test Nos. 1 and 16, whether or not sintered bodies were included in the composite bodies was confirmed. In the Examples, as a simple method, whether or not sintered bodies were included in the composition was confirmed using a laser diffraction particle size distribution analyzer. If a particle size distribution obtained using the laser diffraction particle size distribution analyzer was bimodal, and the frequency of a peak with a larger particle size was higher than 1/5 of the frequency of a peak with a smaller particle size, it was determined that the particles included sintered bodies ("A (Acceptable)" in Table 2). Otherwise, it was determined that the particles did not include sintered bodies ("NA (Not Acceptable) in Table 2"). Determination results are shown in Table 2.

### [Table 2]

**TABLE 2**

| Test No. | Composite bodies | | | Evaluation Result | |
|---|---|---|---|---|---|
| | Presence or Absence of Sintered Bodies | Volume Percentage of Resin (%) | HSC (/mm) | Adhesiveness | Discharge Capacity |
| 1 | - | - | - | 1.00 | 100.0 |
| 2 | A | 30.8 | 22.6 | 2.38 | 89.3 |
| 3 | A | 30.8 | 33.3 | 2.74 | 91.1 |
| 4 | A | 30.8 | 28.2 | 2.00 | 93.7 |
| 5 | A | 35.4 | 49.2 | 1.79 | 97.5 |
| 6 | A | 35.4 | 41.5 | 1.70 | 90.4 |
| 7 | A | 24.2 | 30.7 | 2.00 | 92.8 |
| 8 | A | 30.8 | 32.4 | 2.70 | 91.2 |
| 9 | A | 30.8 | 28.5 | 2.04 | 93.7 |
| 10 | A | 35.4 | 42.2 | 2.24 | 86.5 |
| 11 | NA | 35.4 | 28.0 | 1.09 | 90.2 |
| 12 | A | 43.1 | 49.8 | 1.05 | 96.7 |
| 13 | A | 43.1 | 53.9 | 1.08 | 96.8 |
| 14 | A | 30.8 | 18.1 | 1.20 | 95.3 |
| 15 | A | 30.8 | 55.6 | 1.10 | 98.1 |
| 16 | - | - | - | - | - |
| 17 | A | 13.1 | 31.5 | 1.02 | 93.6 |
| 18 | NA | 13.3 | 11.0 | 1.20 | 97.7 |

### [Calculation of volume percentage of resin in composite bodies]

As for the metal foil for a current collector of each test number other than Test Nos. 1 and 16, the volume percentage of the resin in the composite bodies was calculated. In the Examples, as a simple method, the volume percentage of the resin was calculated using a weight ratio of the resin in the composition and the specific gravity of the resin. The specific gravity used was 0.97 for SBR, 1.6 for CMC, 1.78 for PVdF, 8.9 for the Ni particles, and 1.8 for the carbon particles. The obtained volume percentage of the resin is shown in Table 2.

### [HSC measurement]

As for the metal foil for a current collector of each test number other than Test Nos. 1 and 16, the HSC (/mm) was measured using the above-described method. The line roughness measurement was performed using a device with the trade name "Shape Measurement Laser Microscope VK-X100" manufactured by Keyence Corporation. The line roughness measurement was performed at three arbitrarily selected positions in a direction perpendicular to the longitudinal direction (rolling direction) of the metal foil for a current collector. HSCs were determined, and an arithmetic average value thereof was used. The obtained HSC is shown in Table 2.

### [Adhesiveness test]

As for the metal foil for a current collector of each test number other than Test No. 16, the adhesiveness test was performed using the above-described method. The test specimen had a width of 15 mm and a length of 74 mm (coated portion: 40 mm). The peel strength (N/m) of each test specimen was measured. The peel strength of Test No. 1 was used as a reference value, and peel strengths of the other test numbers were expressed as relative values with respect to the reference value. The obtained peel strength (N/m) (relative value) is shown in the column "Adhesiveness" in Table 2.

### [Evaluation of discharge capacity]

As for the metal foil for a current collector of each test number other than Test No. 16, the discharge capacity was evaluated using the above-described method. Specifically, the composition was applied onto the base material surface of each test number other than Test No. 16 such that the thickness of the composition was 50 µm. The composition was dried at 75°C for 20 minutes, and the volume of composite bodies was determined. The volume of the composite bodies was determined from the weight of the applied composition, the components of the composition, and the mixing ratio between the components. Furthermore, an electrode mixture layer was formed with a thickness of 50 µm on the base material surface to which the composition had not been applied. The volume of the electrode mixture layer with the thickness of 50 µm was taken to be 100.0, the volume of the composite bodies was subtracted from the volume of the electrode mixture layer, and the obtained value was defined as the discharge capacity. The obtained discharge capacity is shown in the column "Discharge Capacity" in Table 2.

### [Evaluation results]

As shown in Tables 1 and 2, in the metal foils for a current collector of Test Nos. 2 to 10, the composite bodies included Ni particles having an average particle size of 20 µm or less, sintered bodies, and a resin with a volume% of 14.0 to 40.0. Furthermore, in these metal foils for a current collector, the HSC was 20.0 to 50.0 /mm. As a result, the peel strength (relative value) was 1.50 or more, and the metal foils exhibited high adhesiveness. Furthermore, although these metal foils for a current collector exhibited high adhesiveness, the discharge capacity (relative value) was 85.0 or more, and it was possible to maintain the discharge capacity with use of these metal foils.

Moreover, in the metal foils for a current collector of Test Nos. 2 to 9, the Ni particles had an average particle size of 2 to 20 µm. As a result, the discharge capacity (relative value) was 89.0 or more, and it was possible to maintain the discharge capacity at a higher level with use of these metal foils for a current collector.

On the other hand, in the metal foil for a current collector of Test No. 11, the composite bodies did not include sintered bodies. As a result, the peel strength (relative value) was less than 1.50, and the metal foil for a current collector did not have high adhesiveness.

As for the metal foil for a current collector of Test No. 12, the volume percentage of the resin in the composite bodies was too high. As a result, the peel strength (relative value) was less than 1.50, and the metal foil for a current collector did not have high adhesiveness.

As for the metal foil for a current collector of Test No. 13, the volume percentage of the resin in the composite bodies was too high, and the HSC was too large. As a result, the peel strength (relative value) was less than 1.50, and the metal foil for a current collector did not have high adhesiveness.

As for the metal foil for a current collector of Test No. 14, the HSC was too small. As a result, the peel strength (relative value) was less than 1.50, and the metal foil for a current collector did not have high adhesiveness.

As for the metal foil for a current collector of Test No. 15, the HSC was too large. As a result, the peel strength (relative value) was less than 1.50, and the metal foil for a current collector did not have high adhesiveness.

As for the metal foil for a current collector of Test No. 16, it was not possible to form and hold composite bodies.

As for the metal foil for a current collector of Test No. 17, the volume percentage of the resin in the composite bodies was too low. As a result, the peel strength (relative value) was less than 1.50, and the metal foil for a current collector did not have high adhesiveness.

In the metal foil for a current collector of Test No. 18, the composite bodies did not include Ni particles and sintered bodies. Also, in this metal foil for a current collector, the volume percentage of the resin in the composite bodies was too low, and the HSC was too small. As a result, the peel strength (relative value) was less than 1.50, and the metal foil for a current collector did not have high adhesiveness.

An embodiment of the present disclosure has been described above. However, the foregoing embodiment is merely an example for implementing the present disclosure. Accordingly, the present disclosure is not limited to the above embodiment, and the above embodiment can be appropriately modified and implemented within a range that does not deviate from the gist of the present disclosure.

## Claims

1. A metal foil for a current collector, comprising:
a base material; and
a plurality of composite bodies held on a surface of the base material,
wherein
the plurality of composite bodies include:
Ni particles having an average particle size of 20 µm or less;
a sintered body formed by sintering a plurality of the Ni particles; and
a resin with a volume% of 14.0 to 40.0, and
on a surface of the metal foil for a current collector,
the number of peaks whose height from the surface of the base material is larger than 10 µm is 20.0 to 50.0 /mm, the peaks being identified through line roughness analysis.

2. The metal foil for a current collector according to claim 1, wherein:
a mean thickness of the base material is 5 to 30 µm.

3. An electrode comprising:
the metal foil for a current collector according to claim 1 or 2; and
an electrode mixture layer formed on the surface of the metal foil for a current collector.

4. A battery comprising:
the electrode according to claim 3; and
an electrolyte.
